# EUROPEAN PATENT APPLICATION

(11) **EP 4 571 096 A1**
(43) Date of publication of application: **18.06.2025**
(21) Application number: 23212804.1
(22) Date of filing: 28.11.2023
(51) Int. Cl.: F03D 1/06, B25J 15/06, B25J 9/02, B29C 31/08, B29C 37/00, B29C 33/26, B29C 65/78, B29C 70/54, B64F 5/10, B29D 99/00, B23P 19/04, B23P 21/00, B29C 33/12, B29C 33/44, B29C 37/02

(54) **SYSTEM AND METHOD FOR MANUFACTURING WIND TURBINE BLADES**

(71) Applicant: LM Wind Power A/S, 6000 Kolding (DK)
(72) Inventor: NYTOFT, Thomas, 6640 Lunderskov (DK); MOSEGAARD, Ivan Kaab, 6640 Lunderskov (DK)
(74) Representative: Bardehle Pagenberg S.L.

(57) **Abstract**

The present disclosure relates to methods for manufacturing a wind turbine blade. The methods comprise providing a first blade mold (100) in a first workstation (51), and providing a set of hinge devices (300) in the first workstation (51), the hinge devices (300) comprising a static member (302) and a movable member (301). Furthermore, the method comprises coupling a first tool (200) to the movable members (301) of the hinge devices (300) and rotating the movable members (301) with respect to the static members (302) to carry out one or more first operations with the first tool (200). The method also comprises coupling a second tool (400) to the movable members (301) of the hinge devices (300) and rotating the movable members (301) with respect to the static members (302) to carry out one or more second operations with the second tool (400). The present disclosure further comprises a system for use during manufacturing of a wind turbine blade (10).

## Description

### FIELD

The present disclosure relates to wind turbine blades, and more particularly, to a method for manufacturing wind turbine blades. The disclosure further concerns a system used in the manufacturing of wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer and are usually manufactured as shell parts in molds, where the top side and the bottom side of the blade profile (typically the upwind or pressure side and the downwind or suction side, respectively) are manufactured separately by arranging glass fiber mats in each of the two molds and injecting a liquid resin, which subsequently is cured. Afterwards, the two blade shell parts or blade halves are glued together, often by means of internal flange parts. Glue is applied to the inner face of the lower blade half before the upper blade half is lowered thereon or vice versa. Additionally, one or more reinforcing profiles (shear webs), extending along the length of the blade, are often attached to the inside of the lower blade half prior to gluing to the upper blade half.

It is known to manufacture wind turbine blades where each of the wind turbine blades are molded and assembled at the same workstation. The wind turbine blade may then be moved to another workstation, typically a finishing workstation, where the wind turbine blade is cut, trimmed, painted and the final fittings are mounted on the wind turbine blade.

However, as the demand for wind turbines is rapidly increasing, it is found increasingly difficult to scale this conventional manufacturing method to accommodate the demand for several reasons: Firstly, the usual manufacturing method requires that all the materials required for manufacturing a wind turbine blade, e.g. resin and fiber reinforcement material, be transported to every workstation, which is logistically demanding. Secondly, every workstation has to be equipped with tools necessary for every single manufacturing step in the process, which results in a significant overhead. Additionally, the usual manufacturing method requires a mold in every single workstation, which is expensive since production and maintenance of molds are time consuming and thus expensive. Furthermore, the conventional manufacturing method occupies a lot of space, and since the workers at each workstation have to perform a variety of manufacturing steps, there is a risk that the quality of the manufactured wind turbine blades may suffer.

So far, wind turbine production still relies on the above-mentioned manufacturing method. EP2403708 proposes an alternative manufacturing method and an alternative manufacturing line involving "moving molds". In this prior art document, a manufacturing line is disclosed, wherein wind turbine blades are formed in a number of mold sets, each of the mold sets comprising at least a first mold comprising a first mold cavity. The manufacturing line further comprises a number of separate workstations, where separate manufacturing steps are carried out. In particular, a sequence of steps in different workstations may be carried out to manufacture each of the blade shell parts. Once manufactured, the two blade shell parts are moved to a separate workstation where they are adhered to each other, e.g. by gluing flanges located at the leading edge and trailing edge of the finished wind turbine blade. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method in EP2403708 furthermore provides that each workstation can be equipped with specialized and advanced equipment that is dedicated to the manufacturing step carried out at each workstation. Additionally, each workstation can be manned with specialized workers that are skilled and trained in the manufacturing step carried out at that particular workstation, which lowers quality risks. However, some of the workstations can also be automated, e.g. by using robots, such that fewer workers are needed. Automation is also expected to additionally improve the quality of the manufactured wind turbine blades.

Regardless of whether a conventional manufacturing method, i.e. a method where each wind turbine blade is molded and assembled at the same workstation, or an alternative manufacturing method involving "moving molds" is employed, manufacturing steps comprising the use of cranes or other hoisting equipment are present in prior-art systems and methods. Thus, a crane or hoisting assembly may be used to lift the shear webs for attachment to the inside of the lower blade half. The use of a crane or heavy lifting devices is also known for the placement of spar caps in a blade mold. Furthermore, a crane or hoisting assembly may also be used to lift one of the mold parts and to rotate it about a hinge line for closure of the molds. Throughout this disclosure, a mold will primarily refer to each of the mold parts used for the manufacture of a blade shell part. Finally, a crane or hoisting assembly may also be used to demold the blade, i.e. to lift and separate the manufactured blade, comprising the attached lower and upper blade halves, from the blade mold.

The use of cranes or hoisting assemblies in order to conduct manufacturing steps exhibits a number of difficulties, especially as the industry moves to larger wind turbine blades. As an example, shear webs are slender and flexible elements. The handling and precise positioning of the shear webs by means of a crane requires a tool to hold the shear webs firmly. The tooling becomes increasingly complex, heavy and expensive as the size of the blades increases. Consequently, the cranes and the infrastructure around it also become increasingly complex and expensive. Furthermore, the use of cranes can result in a lack of reproducibility, leading to quality issues, or even in damage of the shear webs due to collisions during the manufacturing processes.

As a further example, the use of overhead cranes for hoisting the manufactured blade for demolding operations, i.e. for lifting and separating the closed blade after bonding of the two blade shell parts from the blade mold, may result in swaying of the suspended blade. Such swaying increases the risk of potential damage to the manufactured blade and/or to the associated equipment. Furthermore, the use of cranes and other overhead hoisting assemblies may involve working under suspended loads, which may also pose a risk for operators in the manufacturing plant.

Consequently, further improvements are still welcome, especially in terms of safety, precision and flexibility of wind turbine blade manufacturing lines. The present disclosure provides examples of methods and systems for blade manufacturing that provide improvements over prior art methods and systems.

### SUMMARY

In a first aspect of the disclosure, a method for manufacturing a wind turbine blade is provided. The method comprises providing a first blade mold in a first workstation, the first blade mold having a first cavity for manufacture of a first blade shell. The method also comprises providing a set of hinge devices in the first workstation, the hinge devices having a static member and a movable member, the movable member being configured to rotate with respect to the static member about a pivot axis. Furthermore, the method comprises coupling a first tool to the movable members of the hinge devices and rotating the movable members with respect to the static members to carry out one or more first operations with the first tool. The method further comprises uncoupling the first tool from the movable members of the hinge devices, coupling a second tool to the movable members of the hinge devices, and rotating the movable members with respect to the static members to carry out one or more second operations with the second tool. Finally, the method comprises uncoupling the second tool from the movable members of the hinge devices.

According to this aspect, the method provides for the usage of a set of hinge devices in multiple blade manufacturing operations. The hinges comprise a movable member, which can be releasably coupled to at least a first and a second tool, each tool being configured to assist during certain manufacturing operations. The use of different tools in combination with a set of hinges provides increased flexibility to the manufacturing line. In particular, the set of hinges may be arranged at a first workstation of the manufacturing plant and the hinges may be releasably connected to different tools in that same workstation. Alternatively, the hinge devices may be moved from a first workstation to another workstation, in which case different tools may be arranged at different workstations. In some examples, the blade mold may also be movable, in which case increased flexibility may be achieved.

The use of hinge devices may provide for improved control and precision in certain manufacturing operations as will be shown in more detail below. More specifically, automation may be facilitated due to the controllable and repeatable movement of the hinges.

In some examples, the pivot axis may be substantially horizontal i.e. the axis may be substantially parallel to the floor. In other examples, the pivot axis may be arranged substantially parallel to a longitudinal axis of the first blade mold. In some of these cases, the longitudinal axis of the first blade mold may be substantially horizontal.

As used throughout the present disclosure, a tool that may be coupled to a hinge device may be regarded as any component that may be coupled to a hinge device and that may be used in a manufacturing step or operation. In this sense, the term tool may be understood to encompass e.g. a blade mold that can be coupled to a hinge device.

In another aspect, a system for use during manufacturing of a wind turbine blade in a manufacturing plant is provided. The system comprises a first blade mold having a first cavity for manufacture of a first blade shell. The system also comprises a first tool configured to assist during one or more first operations and a second tool configured to assist during one or more second operations. Finally, the system comprises a set of hinge devices having a static member and a movable member, the movable member being configured to rotate with respect to the static member about a pivot axis and being further configured to be releasably connected to the first tool and to the second tool.

According to this aspect of the disclosure, a system for the manufacture of wind turbine blades is provided which results in a manufacturing plant with increased flexibility and improved safety. In particular, the provision of a shared set of hinge devices allows for the same equipment to be used in different manufacturing steps, thus increasing efficiency and reducing cost of the plant equipment. Furthermore, in examples of the disclosure, hinge devices may be used instead of overhead cranes or other lifting equipment. Consequently, logistics of the manufacturing plant may be simplified due to less stringent requirements when compared with those arising from the use of heavy lifting equipment. Thus, in some cases, the use of such heavy lifting equipment may become a limiting factor in the size of the blades that can be produced in a building of a certain height. Not only costs associated with lifting equipment are reduced, but a reduction of working activities under suspended loads is also achieved. Work under suspended loads is known to pose a risk for operators in the manufacturing plant so a reduction in such working activities increases safety in the manufacturing plant.

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations.

In examples of the present disclosure, after a blade, or a blade shell, has undergone the operations assigned to a specific workstation, the mold with the blade or blade shell may be discharged from the workstation, e.g. it may be conveyed to the next workstation. Each of the workstations may include one or more production tools. A workstation may also be regarded as a "cell" of a production line.

As used throughout the present disclosure, a "production line", or "manufacturing line" may be regarded as a group of workstations which are generally arranged in the same geographical location i.e. at a manufacturing site such as a factory. The production line may in particular include an assembly of two half shells and the end product of the production line may be a finished blade, or almost finished blade (which only requires minor finishing operations).

Throughout this disclosure, the words operations and steps may be used interchangeably to refer to the manufacturing activities required for blade manufacturing. Furthermore, the operations or steps may refer to any such activity. In particular, by way of non-limiting examples, operations may include arrangement of glass fiber mats on a blade mold, resin infusion of glass fiber mats, attachment of one or more shear webs inside the blade, gluing of two blade halves to obtain a closed blade, demolding of an already closed blade from the blade mold or finishing operations such as painting, trimming or sanding.

### BRIEF DESCRIPTION OF THE DRAWINGS

Figure 1 illustrates a perspective view of an example of a wind turbine;
Figures 2A - 2B illustrate a perspective view of an example of a wind turbine blade and an example of an internal structure of a wind turbine blade;
Figure 3 schematically illustrates a system for use during blade manufacturing;
Figure 4 is a flowchart of a method for manufacturing a wind turbine blade;
Figures 5A - 5B schematically illustrate at least a part of a production line for manufacturing a wind turbine blade according to examples of the disclosure;
Figures 6A - 6I illustrate an example of a system for use during blade manufacturing, the system comprising a tool for attachment of shear webs;
Figure 7 is a flowchart of a method for attaching shear webs according to an example;
Figures 8A - 8D illustrate an example of a system for use during blade manufacturing, the system comprising a tool for blade demolding;
Figure 9 is a flowchart of a method for demolding a wind turbine blade according to an example;
Figures 10A - 10D illustrate an example of the final steps of a method for demolding a wind turbine blade;
Figures 11A - 11C illustrate a further example of the final steps of a method for demolding a wind turbine blade.

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

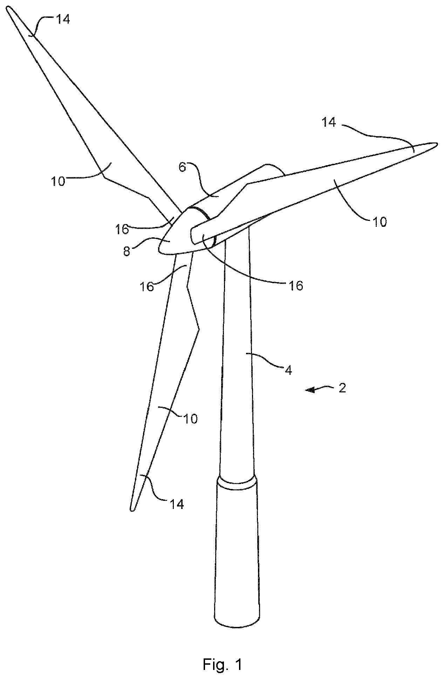

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

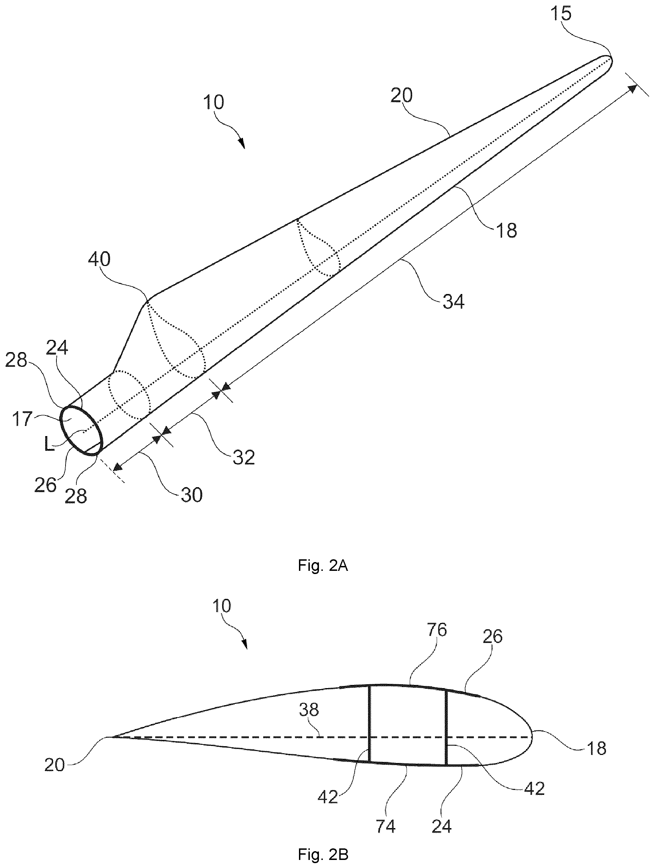

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub 8. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shell parts (also referred to as half shells or blade halves), a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side shell part 24, a suction side shell part 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

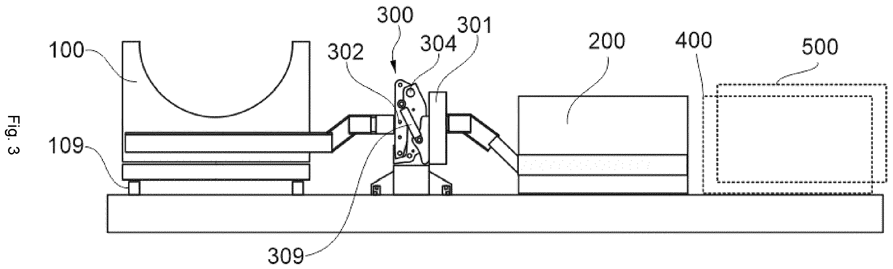

Figure 3 provides a schematic view of a system for use during manufacturing of a wind turbine blade according to an example of the disclosure. The system comprises a first blade mold 100 having a first cavity for manufacture of a first blade shell. The system further comprises a first tool 200, configured to assist during one or more first operations, and a second tool 400, configured to assist during one or more second operations. Furthermore, the system comprises a set of hinge devices 300 comprising a static member 302 and a movable member 301, the movable member 301 being configured to rotate with respect to the static member 302 about a pivot axis 304 and being further configured to be releasably connected to the first tool 200 and to the second tool 400.

In examples of the disclosure, the pivot axis 304 may be a substantially horizontal pivot axis, i.e. an axis substantially parallel to the floor. The substantially horizontal pivot axis 304 may be parallel to a longitudinal axis of the first blade mold 100. In other examples, the pivot axis 304 may be inclined with respect to the horizontal plane. This may be due to tolerances in the system and/or to specific choices in the orientation of the equipment, e.g. of the first blade mold 100, the first tool 200 of the second tool 400.

At least some of the hinge devices 300 may comprise an actuator 309 to rotate the movable member 301 with respect to the static member 302. The actuator 309 may comprise one or more hydraulic or pneumatic pistons. By providing an actuator 309 in the hinge devices 300, the use of further equipment, such as cranes, to enable the rotation of the movable member 301 may be avoided.

The first blade mold 100 shown in Figure 3 may contain different parts of the blade depending on the stage of the manufacturing sequence. Thus, the first blade mold 100 may contain glass fiber (mats) if the blade mold 100 is still at an early stage of production comprising, e.g. arrangement of the glass fiber material or resin infusion. Alternatively, the first blade mold 100 may contain an already fabricated first blade shell part if, for instance, the manufacturing step corresponds to either the attachment of shear webs 42 on the inside of the first blade shell part or to the closure of the blade 10, in which case a first blade shell part may be contained in the first blade mold 100 so that a second blade shell part can be positioned on top of the first blade shell part and attached to it. As a further example, the first blade mold 100 may contain a closed blade 10, i.e. a manufactured blade after the first blade shell part and the second blade shell part have been bonded together. This may be the case if, for instance, the operation corresponds to the demolding of the blade, i.e. to the removal of the manufactured blade from the first blade mold 100 at the end of the process.

In examples of the disclosure, the system may further comprise a third tool 500 configured to assist during one or more third operations. Such third tool 500 is also schematically depicted in Figure 3.

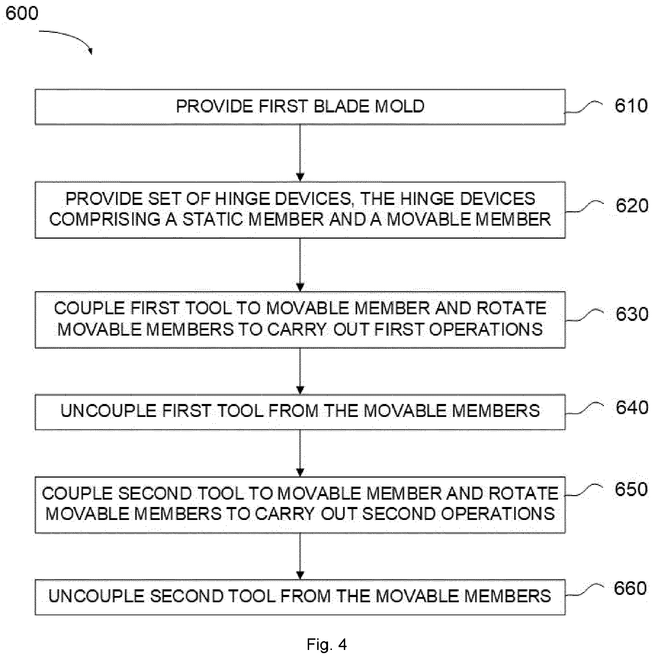

Figure 4 provides an example of a method 600 for manufacturing a wind turbine blade 10 according to the disclosure. The method 600 comprises, at block 610, providing a first blade mold 100 in a first workstation, the first blade mold 100 having a first cavity for manufacture of a first blade shell. Block 620 of the method comprises providing a set of hinge devices 300 in the first workstation, the hinge devices 300 comprising a static member 302 and a movable member 301, the movable member 301 being configured to rotate with respect to the static member 302 about a pivot axis 304. The method further comprises, at block 630, coupling a first tool 200 to the movable members 301 of the hinge devices 300 and rotating the movable members 301 with respect to the static members 302 to carry out one or more first operations with the first tool 200. Furthermore, block 640 of the method comprises uncoupling the first tool 200 from the movable members 301 of the hinge devices 300. Block 650 then comprises coupling a second tool 400 to the movable members 301 of the hinge devices 300 and rotating the movable members 301 with respect to the static members 302 to carry out one or more second operations with the second tool. Finally, block 660 comprises uncoupling the second tool 400 from the movable members 301 of the hinge devices 300.

According to this method 600, a set of hinge devices 300 is used in multiple blade manufacturing operations. To this end, use is made of the fact that the system depicted in Figure 3 provides for the tools 200, 400 and 500 to be releasably, i.e. not permanently, connected to the movable member 301 of the hinge devices 300. The tools 200, 400, 500 may be additionally configured for attachment to the same hinge devices, i.e. the tools may comprise fixtures, mounts or other connection systems specifically adapted to the hinge devices. This feature provides increased flexibility to the method and to the corresponding manufacturing line as different tools, intended for different purposes, may be mounted on the hinge devices 300. Consequently, the hinge devices 300 may act as multiuse devices that may be arranged to support during different stages of the fabrication process. By enabling such a shared hinge system, a reduction in costs is also achieved as the provision of multiple sets of hinge devices or other mechanisms can be prevented.

Figure 4 includes a plurality of blocks representing different operations. Nevertheless, the method 600 described in relation to Figure 4 is not limited to a specific sequence. In examples of the disclosure, the coupling of the second tool 400 may occur after the uncoupling of the first tool 200, thus giving place to a sequential process in which the one or more second operations may be conducted after the one or more first operations. Such example is also illustrated in Figure 3, in which the movable member 301 of the hinge device 300 is only coupled to the first tool 200 whereas additional tools 400, 500 are shown in an uncoupled stage.

Nevertheless, in a further example, the coupling of the second tool 400 may occur substantially simultaneously with the coupling of the first tool 200, or while the first tool 200 is still coupled to some of the hinge devices 300 so that the first operations and the second operations may be carried out in a substantially simultaneous manner. Specifically, different tools may be arranged at different positions along the length of the blade 10 and different operations may be conducted simultaneously at different positions of the manufactured blade 10.

In another example of the disclosure, a third tool 500 may be provided. Thus, a method may be provided comprising coupling a third tool 500 to the movable members 301 of the hinge devices 300 and rotating the movable members 301 with respect to the static members 302 to carry out one or more third operations with the third tool 500. This method may also comprise uncoupling the third tool 500 from the movable member 301 of the hinge devices 300, i.e. releasing the tool 500 after completion of the corresponding manufacturing steps.

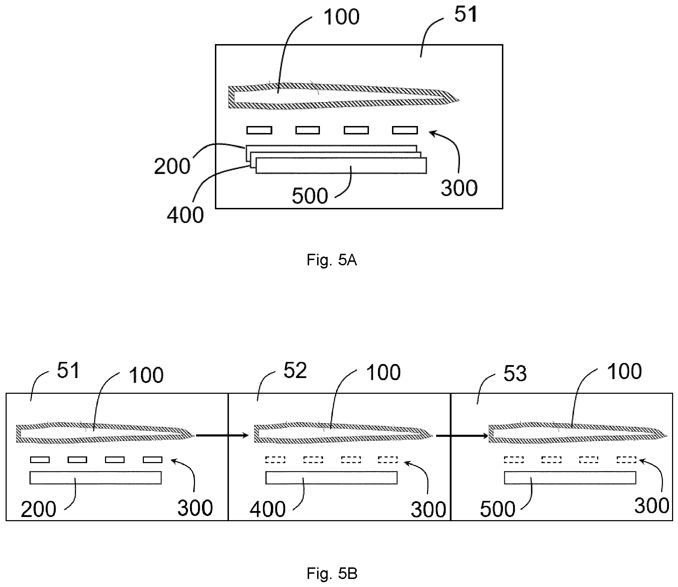

The number of tools may be further increased or, in any case, adjusted to the specific needs of the manufactured blade 10. In some examples, three tools may be preferred for the manufacturing of the blade 10 whereas, in some other cases, a different number of tools may be selected. Similarly, the operations for which the tools are intended may also determine the moment and the sequence of their use during the manufacturing of the blade 10. Furthermore, as shown below (Figures 5A - 5B), the position of the tools 200, 400, 500 and of the hinge devices 300 may also be appropriately varied in examples of the disclosure.

Different methods may be envisaged in examples of the disclosure, which may comprise different manufacturing operations. Thus, the first operations and/or the second operations may comprise one of attaching a shear web 42 to a first blade shell, closing the wind turbine blade 10 by positioning a second blade shell on top of a first blade shell, or demolding the wind turbine blade 10 from a first blade mold 100. A more detailed explanation for these manufacturing operations and, more specifically, about how the systems and methods of this disclosure can be used for the same, will be provided hereinbelow.

In an example according to the present disclosure involving three tools and a sequential usage of the same, a method may be envisaged in which the first operations may comprise attaching a shear web 42 to a first blade shell, the second operations may comprise closing the wind turbine blade 10 by arranging a second blade shell on top of a first blade shell, and the third operations may comprise demolding the wind turbine blade 10 from the first blade mold 100. A further intermediate operation may involve removing the upper mold after the two blade shells have been attached to each other. This example may be particularly advantageous in that the same hinge devices 300 may be used for all three manufacturing operations.

Furthermore, the use of hinge devices 300 for the positioning and attachment of the shear webs 42 and for the demolding operation of the blade 10 may exhibit specific advantages. These operations are commonly carried out by means of cranes or other hoisting equipment. In conventional methods, the use of such cranes comprises working with suspended loads, which can lead to reduced accuracy due to swaying of the load, i.e. of the shear webs 42 or of the demolded blade 10. Moreover, overhead cranes and lifting equipment for such operations are relatively complex and expensive, so the use of hinge devices 300 provides an opportunity for cost saving. Besides, conventional methods may involve operators having to work under suspended loads, i.e. under suspended shear webs 42 or suspended demolded blades 10, which can represent a serious health and safety risk. By using hinge devices 300, the operations under such suspended loads may also be minimized, thus improving safety of the manufacturing operations.

The capability to releasably connect the hinge devices 300 to different tools provides increased flexibility in terms of the physical distribution of the manufacturing plant. Figure 5A provides an example of at least a portion of a blade manufacturing line in a first configuration. In this example, a system is depicted corresponding to a method wherein the first tool 200, the second tool 400 and the third tool 500 are provided in the first workstation 51.

The arrangement shown in Figure 5A allows conducting a plurality of manufacturing operations at the same location by switching from one tool to another, i.e. by attaching different tools to the movable members 301 of the hinge devices 300. This example may be preferred, for instance, in cases comprising manufacturing plants in which all the manufacturing steps, or most of them, are conducted in the same workstation. In any case, this example may also be used in a moving mold system i.e. a system in which a mold is moved between different workstations to carry out different operations.

A first blade mold 100 may be positioned in workstation 51 and the different steps of fiber glass arrangement, infusion, shear webs placement, etc. may be carried out by changing the corresponding tools. One of those tools may comprise a second blade mold, in which case said second blade mold may also be arranged in the workstation 51 for its coupling to the movable members 301 of the hinge devices 300 to enable closing of the blade by positioning the second blade mold on top of the first blade mold 100. Furthermore, a demolding tool may be provided in workstation 51, the demolding tool being configured to assist during lifting of the closed blade from the first blade mold 100.

Figure 5B schematically depicts another example of at least a portion of a blade manufacturing line. This example corresponds to a moving mold system, and at least one of the first 200, the second 400 or the third tool 500 may be provided in a second workstation 52 and, more specifically, each of the first tool 200, the second tool 400 and the third tool 500 may be provided in a different workstation.

Thus, in the example shown in Figure 5B, three different workstations 51, 52, 53 are shown and a tool is arranged in each of those workstations: a first tool 200 is arranged in a first workstation 51, a second tool 400 is arranged in a second workstation 52 and a third tool is arranged in a third workstation 53. A set of hinge devices 300 is shown in the first workstation 51. As represented by the dashed lines, these hinge devices 300 may be moved from one workstation to the next so that the movable member 301 of the hinge devices 300 can be coupled to the corresponding tool. In this manner, an optimized use of the hinge devices 300 may be provided as they constitute a multiuse system. In examples of the disclosure, the specific arrangement of the hinge devices 300 may be different in each of the three workstations 51, 52, 53. More specifically, the relative distance between the hinge devices 300 and the number of hinge devices 300 may be adjusted to the different manufacturing operations. In other words, depending on different factors, such as the weight or the size of the tool or the nature of the manufacturing step, a larger or smaller number of hinge devices 300 may be required. Accordingly, the number of hinge devices 300 moved from one workstation to the other may be adjusted.

As also shown in Figure 5B, not only the set of hinge devices 300, but also the first blade mold 100 may be movable. Thus, in examples of the disclosure, a method may be provided comprising moving the first blade mold 100 and at least a portion of the set of hinge devices 300 from the first workstation 51 to the second workstation 52 or to the different workstations 51, 52, 53. According to this further example, the efficiency and the flexibility of the blade manufacturing line may be improved. Thus, the first blade mold 100 may be moved to different workstations 51-53 and each of the workstations 51-53 may be configured to carry out a specific manufacturing step. In order to move the first blade mold 100, a movable frame may be provided for supporting the first blade mold 100. In an example, the frame may comprise a set of wheels 109 to enable such movement as shown in Figure 3.

As a non-limiting example, multiple workstations may be distributed in the manufacturing line and each of them may be specialized to implement one of the following methods: arranging the glass fibers in a blade mold, supplying curable matrix material, infusing curable material, bonding of two blade shell parts, etc.

More specifically, and referring again to Figure 5B, a first workstation 51 may be configured to attach one or more shear webs 42 inside a first blade shell part contained in the first blade mold 100. Accordingly, a first tool 200 may be arranged in the first workstation 51. First tool 200 may be configured to hold the shear webs 42 and it may be configured to connect to the movable members 301 of one or more hinge devices 300. The hinge devices 300 may be used to locate the shear webs 42 inside the first blade shell part.

Upon attachment of the shear webs 42, the first blade mold 100 and at least a portion of the hinge devices 300 may be moved to a second workstation 52. The second workstation 52 may be configured as a closing workstation, i.e. a workstation wherein a second blade shell part is positioned on top of the first blade shell part and attached to it so as to produce a closed blade. In this example, the second tool 400 may comprise a second blade mold, which may contain a second blade shell part. By connecting the second blade mold to the movable member 301 of the hinge devices 300 and by actuating the hinge devices 300 so as to rotate the movable member 301 with respect to the static member 302, the second blade mold may be positioned on top of the first blade mold 100, thus enabling the gluing of the corresponding blade shell parts. The same hinges may subsequently be used to separate the second blade mold from the first blade mold.

Finally, in this example, the first blade mold 100, containing the closed blade, may be moved to a third workstation 53, which may be configured as a demolding workstation. As in the previous transition, at least a portion of the hinge devices 300 may also be moved from the second workstation 52 to the third workstation 53. A third tool 500, configured as a demolding tool, may in this example be arranged in the third workstation 53. As in the previous steps of this example, the demolding tool may be coupled to the movable member 301 of the hinge devices 300. Rotation of the movable members 301 with respect to the static members 302 may then position the demolding tool in position to grip the blade 10, so that the blade 10 can be lifted and moved out of the first blade mold 100, i.e. it can be demolded.

As will be apparent to those skilled in the art, Figures 5A and 5B provide only two examples. Multiple variations and/or combination are also envisaged by the present disclosure. As a further non-limiting example, a first tool 200 may be arranged in a first workstation 51 whereas a second 400 and a third 500 tool may be arranged in a second workstation 52. Furthermore, the total number of workstations and tools may also be adjusted to the manufacturing process. In any case, a set of hinge devices 300 is used to assist in at least two of said manufacturing steps. To this end, depending on the arrangement of the tools, the hinge devices 300 themselves may need to be transferred from one workstation to another.

The configuration of the different tools 200, 400, 500 may differ depending on the manufacturing operations. More specifically, in examples of the disclosure, at least one of the tools may comprise a plurality of parts, the parts being configured to be distributed along the length of the blade mold 100. Figures 5A - 5B depict the tools 200, 400, 500 in a schematic manner and as a single part. Nevertheless, depending on the specific application, at least one of the tools 200, 400, 500 may comprise a plurality of individual parts. Each of those parts may be coupled to the movable member 301 of one or more of the hinge devices 300. As an example, a tool may be split into two parts. One of the parts may be arranged in the root 16 area of the blade 10 whereas the other part may be arranged close to the tip 14 area of the blade 10. Accordingly, some of the hinge devices 300 may be arranged in the area of the blade root 16 or in the area of the blade tip 14. The use of tools comprising multiple parts may be beneficial for operations spanning many meters and, more specifically, for operations spanning substantially the whole length of the blade 10. Thus, the use of a very large and heavy tool, spanning the whole length of the blade 10, may be avoided by providing a certain number of smaller and lighter parts, each located at an optimized position over the length of the blade 10.

In examples, the systems and methods of the disclosure may comprise releasably connecting the static member 302 of at least one of the hinge devices 300 to the first blade mold 100. Such a connection is also visible in Figure 3. The coupling of the static member 302 of the hinge devices 300 to the first blade mold 100 may offer a number of advantages. On the one hand, fixation of the hinge devices 300 to the first blade mold 100 may be used to ensure a precise relative position of the parts. Depending on the manufacturing step, a high accuracy may be required to ensure proper quality. This may be the case, for instance, when referring to the attachment of the shear webs 42, which may be held in position by a corresponding tool attached to the movable member 301 of the hinge devices 300. Shear webs 42 need to be positioned at a precise location in the first shell part contained in the first blade mold 100. By establishing a mechanical coupling between the parts, increased control may be obtained, thus avoiding unwanted deviations during the operation.

As a further advantage, the coupling of the static member 302 of the hinge devices 300 to the first blade mold 100 may provide an anchor point for the hinge devices 300 themselves, which may improve the stability of the system and the accuracy of the method. Indeed, hinge devices 300 may be fixed to a floor of the manufacturing plant. Nevertheless, by providing a further anchoring point at a heavy component such as the first blade mold 100, stability and accuracy of the maneuvers may be enhanced.

In examples comprising both movement of the first blade mold 100 and releasable connection of the static member 302 member of the hinge devices 300 to the first blade mold 100, moving the first blade mold 100 and at least a portion of the set of hinge devices 300 may comprise connecting the static member 302 of the hinge devices 300 to the first blade mold 100 and moving them together. With this example, a more efficient process may be achieved as relocation of both the first blade mold 100 and the hinge devices 300 may be carried out in a single moving step. Furthermore, the fixation of the hinge devices 300 to the first blade mold 100 before the movement may also provide increase robustness to the operation by preventing errors in the positioning of the first blade mold 100 and the hinge devices 300 in the subsequent workstation, which may arise from independent movement of the different parts. By attaching the parts before the movement, relative position between the same may be maintained during the moving maneuver.

In some examples of the present disclosure, a further degree of freedom may be provided to the overall system and to the corresponding method. Thus, a method may be provided comprising vertically displacing at least one of the tools 200, 400, 500 after rotating the movable member 301 of the hinge devices 300 and before carrying out the corresponding operations. Thus, as will be explained in more detail below, different manufacturing steps may require a very precise positioning of the tool with respect to the first blade mold 100 and, more particularly, with respect to the element contained in the first blade mold 100, e.g. a first blade shell part if the manufacturing step is concerned with the positioning of the shear webs 42, or a closed blade 10 if the manufacturing step is concerned with the demolding of the blade 10. In those cases, the method may further benefit from an additional degree of freedom in which the tool, and more specifically, the active part of the tool, is not only rotated to place it in the proximity of the first blade mold 100, but also vertically displaced to provide controlled relative movement for certain operations requiring increased precision.

The vertical displacement of the tool or, of at least a part of the tool, may be achieved in different manners. In an example of a system according to the disclosure, the movable member 301 of the hinge devices 300 may be configured to rotate with respect to the static member 302 about a substantially horizontal pivot axis 304, the horizontal pivot axis 304 being vertically displaceable. Thus, in this example, not only a portion of the tool but the tool in its entirety may be shifted in a vertical direction by displacing the pivot point of the hinge devices 300. Accordingly, no special features or actuators may be required in the tool itself.

In other examples of the disclosure, the hinge devices 300 may not provide for such vertical displacement but the tools themselves may comprise means, e.g. an actuator, capable of displacing at least a portion of the tool with respect to a main body of the tool. In still further examples, a combination of both options may be possible so that vertical displacement may be achieved by a combined action at the hinge devices 300 to displace the horizontal pivot axis 304 and by a vertical displacement at the tool itself.

As already indicated, examples of the disclosure may comprise systems wherein the first tool 200, the second tool 400 and/or the third tool 500 comprise at least one of a tool for attaching a shear web 42 on a blade shell, a mold for manufacturing and containing a blade shell or a tool for demolding a blade 10. In the following paragraphs, some of this examples will be described in more detail.

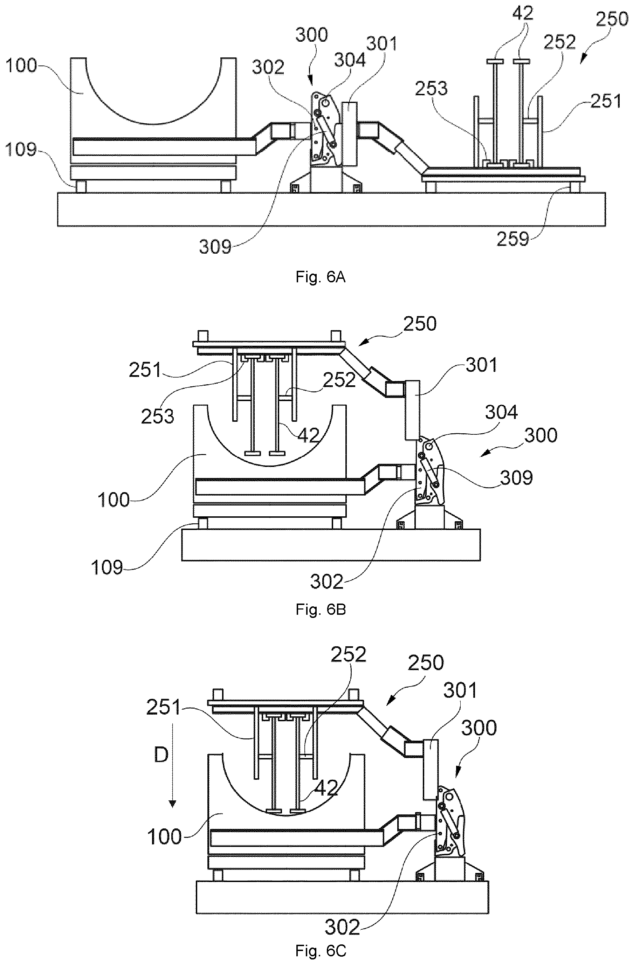

Figures 6A - 6I illustrate an example of a system for attaching a shear web 42 to a first wind turbine blade shell, the first blade shell being held in a blade mold 100. The system comprises a shear web positioning tool 250 configured to hold one or more shear webs 42 and a set of hinge devices 300, each hinge device comprising a static member 302 and a movable member 301. The movable member 301 is rotatable about a pivot axis 304 of the static member 302. The system further comprises that the shear web positioning tool 250 is configured to be connected to the movable members 301 of the hinge devices 300. In this example, the pivot axis 304 may be a substantially horizontal pivot axis.

The system shown in Figures 6A-6I allows attachment of the shear webs 42 to the inside of the first blade shell part and does not require expensive cranes or other lifting equipment. The shear web positioning tool 250 facilitates handling of the shear webs 42, which may have been pre-assembled in the shear web positioning tool 250.

The hinge devices 300 may be such that the movable member 301 may be configured to be releasably connected to the shear web positioning tool 250. In this manner, a versatile system may be provided. In order to enable the releasable connection, the hinge devices 300 may comprise connection interfaces (not shown) configured to be releasably connected to corresponding connection interfaces (not shown) of the shear web positioning tool 250.

The connection interfaces may, in some examples, comprise one or more hooks in one of the hinge devices 300 or the shear web positioning tool 250 configured to engage with connection pins of the other of the hinge device 300 and the shear web positioning tool 250. Furthermore, the connection interfaces may, in some examples, comprise also a locking mechanism (not shown in the figure), e.g. a hydraulic pin in the movable member 301 of the hinge device 300 which may be arranged to engage a pad eye in the shear web positioning tool 250.

As also shown in the example of Figures 6A-6I, the static member 302 of the hinge devices 300 may be configured to be connected to the blade mold 100. In such a case, similar connection interfaces to those used for the releasable connection between the movable member 301 of the hinge devices 300 and the shear web positioning tool 250 may be provided.

As already mentioned with reference to Figure 3, the coupling of the static member 302 of the hinge devices 300 to the blade mold 100 may ensure a precise relative position between the parts and it may provide an anchor point for the hinge devices 300 themselves, which may improve the stability of the system and the accuracy of the method.

Although not visible in the schematic view of Figures 6A-6I, the shear web positioning tool 250 may comprise a tool first part being configured to hold a first portion of the shear webs 42 and being further configured to be connected to a first hinge device 300 of the set of hinge devices 300. The shear web positioning tool 250 may comprise a tool second part being configured to hold a second portion of the shear webs 42 and being further configured to be connected to a second hinge device 300 of the set of hinge devices 300. Shear webs 42 are generally slender and flexible parts that extend along the whole length of the blade 10, or e.g. 80 - 90% of the length of the blade. As wind turbine blades 10 become longer, handling of the shear webs 42 becomes increasingly difficult. In this sense, holding the shear webs 42 at multiple points distributed along their length may be preferred. To this end, one may use a shear web positioning tool 250 spanning the whole length of the shear webs 42. Nevertheless, in this example of the disclosure, the shear web positioning tool 250 may be split into at least two parts, and each of them may be positioned at different positions and, more specifically, at or near different ends of the shear web 42. This system may then result in a more flexible and less heavy shear web positioning tool 250 than if a single part tool is used.

Figure 6A depicts the system in a first configuration, i.e. with the shear web positioning tool 250 resting on a floor of the manufacturing plant and with the hinge devices 300 in a so-called "open configuration". The term "open configuration" is used herein to refer to the situation where the movable member 301 of the hinge devices 300 is in the position where coupling (and uncoupling) to the shear web positioning tool 250 generally takes place. This corresponds to a situation wherein the blade mold 100, the hinge devices 300 and the shear web positioning tool 250 are placed substantially side by side.

In order to ensure a proper positioning of the shear webs 42 upon attachment to the inside of the shell part contained in the blade mold 100, shear webs 42 may be pre-mounted with the adequate position in the shear web positioning tool 250. Such pre-mounting may be carried out either before or after coupling the shear web positioning tool 250 to the movable member 301 of the hinge devices 300. In order to facilitate such pre-mounting, the shear web positioning tool 250 may comprise support members 251 to support the shear webs 42 during the attaching process. As shown in Figure 6A, support members 251 may be embodied as beams providing a structural framework to support the shear webs 42. In some examples, pre-assembly may further include providing supports or attachments between one shear web and another.

Furthermore, the number and position of the support members 251 may be adjustable so as to adapt to different shear web configurations 42. The size and the number of shear webs 42 will depend on the design of the blade being manufactured. In the example shown in Figures 6A-6I, a system comprising two shear webs 42 is depicted. Nevertheless, examples of blades comprising one, three or any other suitable number of shear webs may also be provided. Also the distance between the shear webs 42 may vary for different blade designs. Accordingly, some examples may provide a versatile shear web positioning tool 250 in which the support members 251 may be easily dismountable and displaceable so as to adapt the precise positioning of the shear webs 42 to the design of the blade.

As also depicted in Figure 6A, the shear web positioning tool 250 may also comprise one or more fixation elements 252, 253 configured to secure the shear webs 42 to the support members 251 and/or to a base of the shear web positioning tool 250. More specifically, Figure 6A depicts a first group of fixation elements 252 arranged between the support members 251 and the shear webs 42 and a second group of fixation elements 253 arranged between the shear webs 42 and the base of the shear web positioning tool 250.

The fixation elements 252, 253 may be provided to prevent relative movement between the shear webs 42 or between the shear webs 42 and the movable member 301 of the hinge devices 300 during the attachment process. In order to ensure a correct positioning of the shear webs 42 on the inside of the first blade shell part contained in the blade mold 100, it is not only preferred to provide and ensure a proper positioning of the shear webs 42 in the shear web positioning tool 250, but also to ensure no relative movement during the rotation maneuver.

After coupling of the shear web positioning tool 250 to the movable member 301 of the hinge devices 300, the movable member 301 of the hinge devices 300 is rotated about the pivot axis 304 so as to bring the shear web positioning tool 250 and the corresponding shear webs 42 in close proximity to the blade shell part. This second configuration of the system is depicted in Figure 6B, in which the hinge device 300 is shown in a so-called "closed configuration". A "closed configuration" in the present disclosure is to be understood as a configuration of the hinge devices 300 in which the movable member 301 has been already rotated with respect to the static member 302 and further in which the shear web positioning tool 250 is in position for the manufacturing operations to be carried out in the blade mold 100 area.

Different fixation elements may be used in examples of the disclosure. Thus, fixation elements may comprise mechanical clamps and/or vacuum holders. As a non-limiting example, Figure 6A depicts the use of clamps 253 for the fixation of the shear webs 42 to the base of the shear web positioning tool 250. More specifically, shear webs 42 comprising flanges may be used in this example and the clamps 253 may be fixed to the base of the shear web positioning tool 250, thus providing a mechanical fixation of the shear webs 42 by clamping the flanges. On the other hand, fixation elements 252 are shown as providing fixation between the support members 251 and the shear webs 42 at approximately half of the height of the shear webs 42. Fixation elements 252 may comprise mechanical elements featuring some interference contact with the shear webs 42, in which case physically corresponding features may be defined at both the fixation elements 252 and the shear webs 42. In other examples, vacuum holders may be used for the fixation elements 252, in which case no specific modification may be required on the shear webs 42.

In examples of the system, the system may be configured to enable a vertical adjustment of the position of the shear webs 42 after rotation about the pivot axis 304. Thus, after rotating the movable member 301 of the hinge devices 300 so as to bring the shear web positioning tool 250 in proximity of the first blade shell, the shear web positioning tool 250 may be lowered so as to put the shear webs 42 into contact with the surface of the blade shell. This example is illustrated by Figures 6B and 6C.

Figure 6B shows the configuration of the system after rotation of the movable member 301 of the hinge devices 300 about the pivot axis 304. As seen in Figure 6B, this rotation results in the shear webs 42 being positioned very close to the inner surface of the blade shell part. Nevertheless, a gap may still exist between the end of the shear webs 42 and the inner surface of the shell part. In order to close this gap, a vertically downwards movement may be carried out as depicted in Figure 6C. After such vertical displacement along direction D, the ends of the shear webs 42 may be brought into contact with the surface of the shell part.

Such a two-step approach may be preferred over the direct contact of the shear webs 42 with the shell part upon rotation of the movable member 301 of the hinge devices 300. More specifically, the provision of such vertical movement along direction D may be implemented to absorb minor errors during the positioning and turning operations. In this manner, the reliability of the process may be improved by providing an additional degree of freedom right before establishing the contact between the ends of the shear webs 42 and the surface of the blade shell part.

Apart from providing a better control of the maneuver, the vertical movement may also enable a better fixation or gluing of the shear webs 42. Thus, fixation of the shear webs 42 to the inner surface of the blade shell may comprise applying adhesive at the end of the shear webs 42 and/or on the surface of the first blade shell before putting an end of the shear webs 42 into contact with a surface of the first blade shell. In any case, a controllable vertical movement (i.e. a movement along line D) may be useful to facilitate a proper gluing process and, more specifically, to favor a good distribution of the glue over the contacting areas.

Different alternatives may be envisaged to implement such a vertical movement in different examples. In the example shown in Figure 6C, the movable member 301 of the hinge devices 300 may be configured to rotate with respect to the static member 302 about a substantially horizontal pivot axis 304, and the horizontal pivot axis 304 may be configured to be vertically displaceable. Thus, although not clearly visible in Figures 6B-6C, the pivot point 304 may move slightly downward in the D direction in order to transition from the state in Figure 6B to the state in Figure 6C.

In other examples, the shear web positioning tool 250 itself may be configured to vertically displace the shear webs 42 with respect to the static member 302 of the hinge. In these examples, an actuator may be arranged in a position of the shear web positioning 250 to allow displacing the support members 251 supporting the shear webs 42.

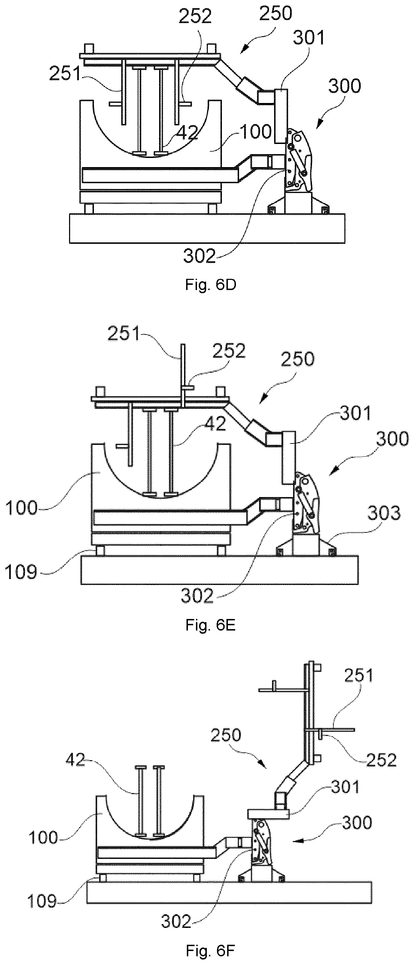

After placement and fixation of the shear webs 42, the fixation elements 252, 253 may be released. More specifically, in examples of the disclosure, fixation elements 252, 253 may be configured to be automatically engaged or disengaged to secure and/or release the shear webs 42. By providing an automatic functionality to the fixation elements, throughput and safety of the shear web attachment operation may be further improved. More specifically, as shown in Figure 6D, fixation elements 252 may be disengaged by automatically displacing them so as to release them from the shear webs 42. To this end, use of vacuum holders may be particularly convenient for the fixation elements 252 as one may easily engage or disengage the holders. On the other hand, clamps 253 fixing the flanges of the shear webs 42 to the base of the shear web positioning tool 250 may be removed manually.

After attachment of the shear webs 42 at their intended position of the shell parts, and after disengagement of the fixation elements, the shear web positioning tool 250 may be moved back to its initial position. In order to carry out that operation without affecting the already installed shear webs 42, the support members 251 may be configured to move between two different operational positions and, more specifically, the one or more support members 251 may be configured to (automatically) move or be moved between two different operational positions.

The displacement of the support members 251 is schematically depicted in Figure 6E. Thus, after attachment and release of the fixation elements 252, 253, one of the support members 251 may be vertically displaced in an upwards direction. In this manner, the movable member 301 of the hinge device 300 can be rotated with respect to the horizontal pivot axis 304 and the shear web positioning tool 250 can be removed from the blade mold 100 area as shown in Figure 6F. Note that, in this example, such movement may be facilitated by the movement of the support member 251 to avoid a collision of the support member 251 with the already installed shear webs 42. Furthermore, the provision of an automatic mechanism to carry out the movement between the two operational positions may increase speed of the process while increasing safety of the maneuver for operators in the manufacturing plant.

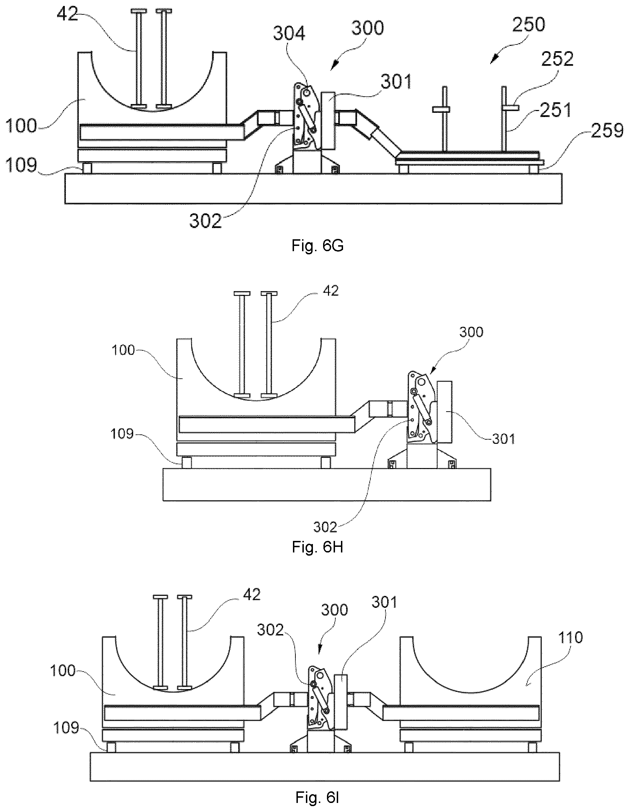

Figure 6G schematically depicts a situation after attachment of the shear webs 42 to the inside of the shell part contained in the blade mold 100, and after returning the shear web positioning tool 250 to its initial position, i.e. the "open" configuration. Different subsequent activities may be carried out depending on the design of the blade manufacturing line.

In one example, the blade mold 100 may be released from the static member 302 of the hinge device 300 and it may be moved out of the workstation. Subsequently, a new blade mold, containing a new blade shell part, may be located in that position and connected to the static member 302 of the hinge device 300. On the other side of the hinge device 300, a new shear web may be arranged on the shear web positioning tool 250. Subsequently, the same steps as those depicted in Figures 6A to 6G may be carried out to attach the shear webs to the blade shell part contained in the newly arranged blade mold.

In other examples of the disclosure, after attachment of the shear webs 42 to the first blade shell, a second blade mold 110, containing a second blade shell, may be provided. The second blade mold 110 may be connected to one or more hinge devices and the second blade mold 110 may be rotated so as to bring the second blade shell into contact with the first blade shell. In this manner, both attachment of the shear webs 42 and closing of the blade, i.e. gluing of the first blade shell and the second blade shell, may take place using the same hinge devices. In particular, both attachment of the shear webs 42 and closing of the blade may be carried out at the same workstation of the manufacturing line.

Furthermore, in an example of the disclosure, at least one the hinge devices used to rotate the second blade mold 110 may be the same as at least one of the hinge devices 300 used to rotate the shear web positioning tool 250. This example is depicted in Figures 6H and 6I. Thus, Figure 6H shows that the shear web positioning tool 250 is uncoupled from the movable member 301 of the hinge device 300 and removed from the workstation. Subsequently, a second blade mold 110 containing a second blade shell may be positioned in the workstation and coupled to the movable member 301 of the hinge device 300 as shown in Figure 6I.

A single hinge device 300 is depicted in Figures 6A - 6I. Nevertheless, as already indicated, a plurality of hinge devices may be provided, in which case not all of them may be necessarily used for both manufacturing steps. More specifically, the operation of closing the mold may require a larger number of hinge devices 300 than the attachment of the shear webs 42 or vice versa.

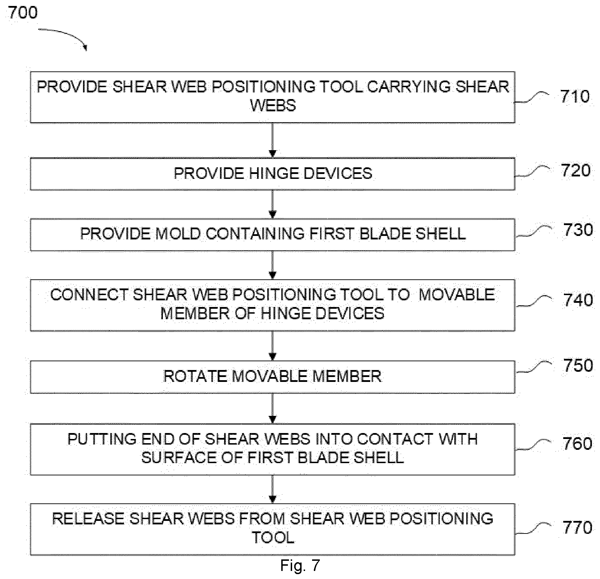

An example of a method 700 for attaching one or more shear webs 42 to a first wind turbine blade shell with a system like the one schematically depicted in Figures 6A - 6I is exemplified by the flowchart presented in Figure 7. Method 700 comprises, at block 710, providing the shear web positioning tool 250 carrying the shear webs 42. The method also comprises providing the one or more hinge devices in block 720 and providing the mold containing the first blade shell in block 730. Block 740 of the method 700 comprises connecting the shear web positioning tool 250 to the movable member 301 of the hinge devices 300. The method also comprises, at block 750, rotating the movable member 301 of the hinge devices 300 about a pivot axis 304 so as to bring the shear web positioning tool 250 in proximity of the blade shell. Block 760 of method 700 comprises putting an end of the shear webs 42 into contact with a surface of the first blade shell. Finally, block 770 comprises releasing the shear webs 42 from the shear web positioning tool 250.

Although a number of blocks are provided in method 700, the method itself is not limited to the specific order or sequence indicated in Figure 7. Furthermore, additional blocks may be added to satisfy specific needs and/or to further improve the method. Thus, adhesive may be applied at the end of the shear webs 42 and/or on the surface of the first blade shell before carrying out block 760 so as to ensure a proper attachment of the shear webs 42. Similarly, a waiting time may be defined for block 770 so as to release the shear webs 42 only after curing of the adhesive.

An example of another tool, intended for a different manufacturing operation, will be provided below.

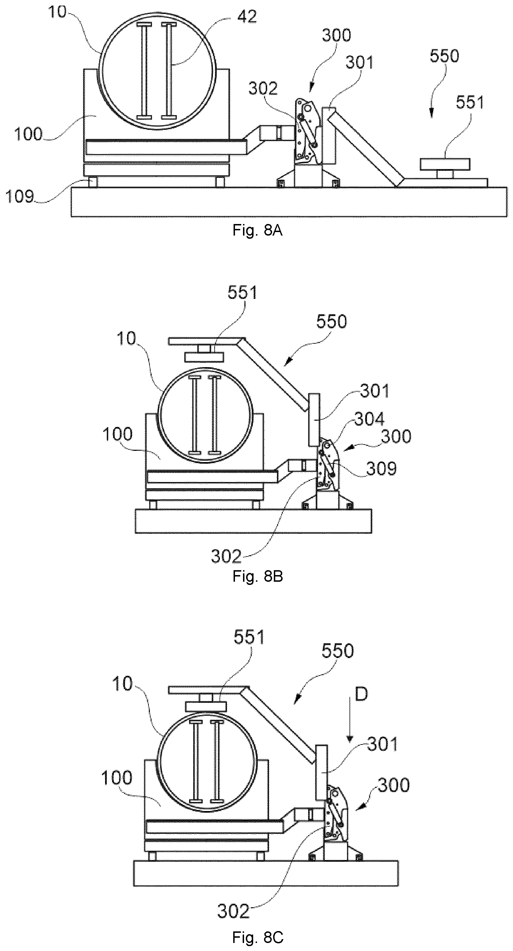

Figures 8A - 8D illustrate an example of a system for demolding a wind turbine blade 10. The system comprises a demolding tool 550, which comprises one or more grippers 551 to grip the wind turbine blade 10, the wind turbine blade 10 being held in a blade mold 100. The system further comprises one or more hinge devices 300 comprising a static member 302 and a movable member 301, the movable member 301 being configured to be connected to the demolding tool 550 and being further configured to rotate with respect to the static member 302 about a pivot axis 304. In this example, the pivot axis 304 may be a substantially horizontal pivot axis, i.e. an axis parallel to the floor.

The system shown in Figures 8A-8D allows gripping a closed blade, i.e. a manufactured blade after the two blade shells have been glued together. The system does not require expensive cranes or other lifting equipment, thus reducing working operations under suspended loads. Furthermore, a more controlled gripping of the blade is achieved by the demolding tool 550. This improved control avoids swaying of the blade, thus mitigating potential damage to the blade and improving overall safety of the operation.

The hinge devices 300 may be such that the movable member 301 may be configured to be releasably connected to the demolding tool 550. In this manner, a versatile system may be provided. In order to enable the releasable connection, the hinge devices 300 may comprise connection interfaces (not shown) configured to be releasably connected to corresponding connection interfaces (not shown) of the demolding tool 550.

The connection interfaces may in some examples comprise one or more hooks in one of the hinge devices 300 or the demolding tool 550 configured to engage with connection pins of the other of the hinge device 300 and the demolding tool 550. Furthermore, the connection interfaces may, in some examples, comprise also a locking mechanism (not shown in the figure), e.g. a hydraulic pin in the movable member 301 of the hinge device 300 which may be arranged to engage a pad eye in the demolding tool 550.

As also shown in the example of Figures 8A-8D, the static member 302 of the hinge devices 300 may be configured to be connected to the blade mold 100. In such case, similar connection interfaces to those used for the releasable connection between the movable member 301 of the hinge devices 300 and the demolding tool 550 may be provided.

As already mentioned with reference to Figure 3, the coupling of the static member 302 of the hinge devices 300 to the blade mold 100 may ensure a precise relative position between the parts and it may provide an anchor point for the hinge devices 300 themselves, which may improve the stability of the system and the accuracy of the method.

Although only a single hinge device 300 is depicted in Figures 8A-8D, an example of the system may comprise a plurality of hinge devices 300, which may be distributed along the length of the blade 10. The length of some wind turbines blades is already exceeding 100 meters so, in order to improve the gripping of the blade 10, a plurality of hinge devices 300 may be arranged along the span of the blade 10. More specifically, hinge devices 300 may be arranged at both the root area 16 and the tip area 14 of the blade. The hinge devices 300 may then be connected to the demolding tool 550, which may accordingly extend over substantially the whole length of the blade 10. In this manner, a uniform distribution of the load may be obtained.

Different grippers 551 may be envisaged in different examples of the demolding tool 550. Specifically, the grippers 551 may comprise a vacuum based connection. Alternatively, or in combination with vacuum connections, the grippers 551 may comprise a mechanical interface (not visible in Figures 8A-8D) configured to engage with a corresponding mechanical interfaces on the blade 10. The use of vacuum based connections or holders may be particularly suitable to enable automation of the process. Furthermore, vacuum connections may be relatively simple to implement as they may not require any specific feature on the blades themselves. On the other hand, mechanical interfaces may be preferred to increase safety of the demolding operation. Similarly, automation may be needed although, in this case, a modification of the blade 10 surface may be carried out in order to enable proper mechanical interference.

Figure 8A depicts the system in a first configuration, i.e. with the demolding tool 550 resting on a floor of the manufacturing plant and with the hinge devices 300 in a so-called "open configuration". The term "open configuration" is used again to refer to the situation where the movable member 301 of the hinge devices 300 is in the position where coupling (and uncoupling) to the demolding tool 550 may take place. This corresponds to the situation wherein the blade mold 100, the hinge devices 300 and the demolding tool 550 are substantially placed side by side.

After rotation of the movable member 301 of the hinge device 300 about the pivot axis 304, the demolding tool 550 may be placed in proximity of the blade 10. More specifically, the grippers 551 of the demolding tool 550 may be positioned in proximity of the blade 10 as shown in Figure 8B. In some examples of the disclosure, the system may be dimensioned such that the rotation of the movable member 301 brings the grippers 551 into contact with the blade 10.

In other examples of the system, the system may be configured to enable a method wherein, before attaching the grippers 551 to the blade 10 surface, a substantially vertical displacement of the grippers 551 in a downwards direction may be carried out so as to bring the grippers 551 into contact with the surface of the blade 10. This is illustrated by Figures 8B and 8C. Thus, Figure 8B shows the configuration of the system after rotation of the movable member 301 of the hinge devices 300 about the pivot axis 304. As seen in Figure 8B, this rotation results in the grippers 551 being positioned closely to the upper surface of the blade 10. Nevertheless, a gap may still exist. In order to close this gap, a vertically downwards movement along direction D may be carried out as depicted in Figure 8C. After such vertical displacement, the grippers 551 may be brought into contact with the surface of the blade 10.

Such a two-step approach may be preferred. More specifically, the provision of such a vertical movement may be provided to absorb minor errors during the positioning and turning operations. In this manner, the reliability of the maneuver may be improved by providing an additional degree of freedom right before establishing the contact between the grippers 551 and the surface of the blade 10. Furthermore, the vertical movement of the grippers 551 may allow adjusting to different diameters of the blade 10. This may be the case if the same demolding tool 550 is intended for use with different blades.

Moreover, as previously mentioned, a plurality of hinge devices 300 may be arranged along the length of the blade 10 and the demolding tool 550 may be attached to those hinge devices 300. More specifically, a plurality of grippers 551 may also be distributed along the length of the blade 10. It is also well-known that the diameter of the blades 10 may vary along the length of the blade 10 (see, e.g. Figure 2). Consequently, in examples of the disclosure, it may be advantageous to use a first step to rotate the movable members 301 of the hinge devices 300 and position the demolding tool 550 with the corresponding grippers 551 above the surface of the blade 10. Then, a second step may be used to individually adjust the grippers 551, distributed along the length of the blade 10, to the dimensions of the blade 10 at each respective location. In this manner, a better gripping of the blade 10 may be obtained. In further examples, the grippers 551 may be adapted to different portions of the blade 10, i.e. some grippers 551 be more suitable for gripping a root portion with a large diameter or cross-section, and potentially a small vertical movement after rotation. Some other grippers may be more suitable for gripping a mid-blade portion or a tip portion with a smaller cross-section and a larger vertical movement after rotation.

Different alternatives may be envisaged to implement such vertical movement in different examples. In the example shown in Figures 8B and 8C, the movable member 301 of the hinge devices 300 may be configured to rotate with respect to the static member 302 about a substantially horizontal pivot axis 304, and the horizontal pivot axis 304 may be configured to be vertically displaceable. Thus, although not clearly visible in Figures 8B-8C, the pivot point 304 may move slightly downwards in the D direction in order to transition from the state in Figure 8B to the state in Figure 8C.

In other examples, only the grippers 551 may be displaceable with respect to the demolding tool 550. In these examples, an actuator may be arranged in a position of the demolding tool 550 to allow displacing the grippers 551.

Upon establishing contact between the grippers 551 and the blade 10, the grippers 551 may be activated to enable gripping of the blade 10. In examples of the disclosure, said activation may be automatic whereas, in some other examples, a manual activation may be preferred. In any case, and as already mentioned, different actuators, including vacuum based connections and mechanical connectors, may be envisaged in different examples.

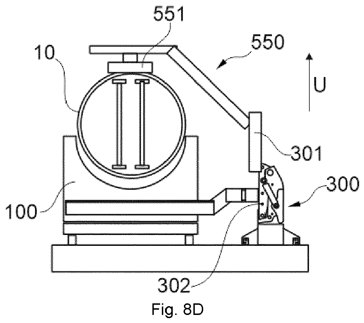

Figure 8D shows the subsequent stage in the demolding operation. Thus, after gripping the blade 10 with the grippers 551, such gripper 551 are moved upwards (direction U) so as to lift the blade 10. In this manner, the blade 10 is separated from the blade mold 100, i.e. the blade 10 is demolded. As shown in Figure 8D, the blade 10 is then supported or gripped by the grippers 551. In this manner, a stable fixation of the blade 10 is achieved so that no swaying or other oscillations of the blade 10 are present as it may be the case if using cranes or other hoisting equipment. Once the blade 10 is lifted, different example alternatives may exist for the continuation of the maneuver as will be shown below.

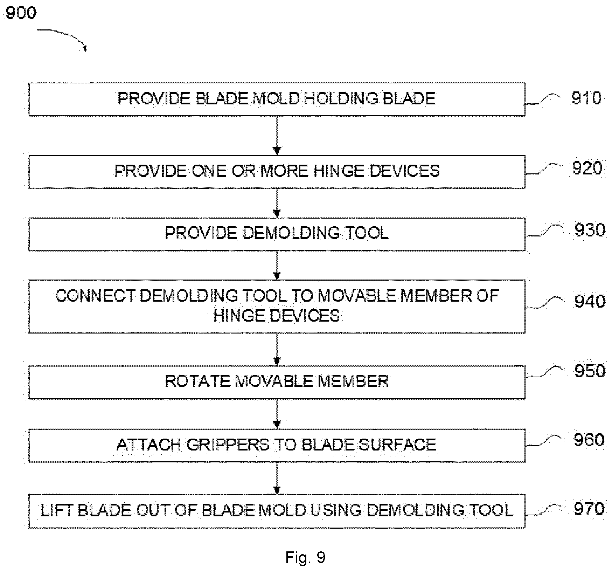

An example of a method 900 for demolding a blade 10 with a system like the one depicted in Figures 8A-8D is exemplified by the flowchart presented in Figure 9. Method 900 comprises, at block 910, providing the blade mold 100 holding the blade 10. The method also comprises providing the one or more hinge devices 300 in block 920 and providing the demolding tool 550 in block 930. Block 940 of the method 900 comprises connecting the demolding tool 550 to the movable member 301 of the hinge devices 300. The method also comprises, at block 950, rotating the movable member 301 of the hinge devices 300 about a pivot axis 304 so as to bring the demolding tool 550 in proximity of the blade 10. Block 960 of method 900 comprises attaching the grippers 551 of the demolding tool 550 to the blade 10 surface. Finally, block 970 comprises lifting the blade 10 out of the blade mold 100 using the demolding tool 550.

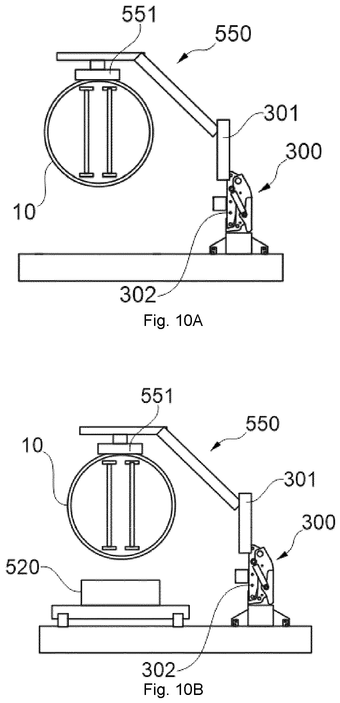

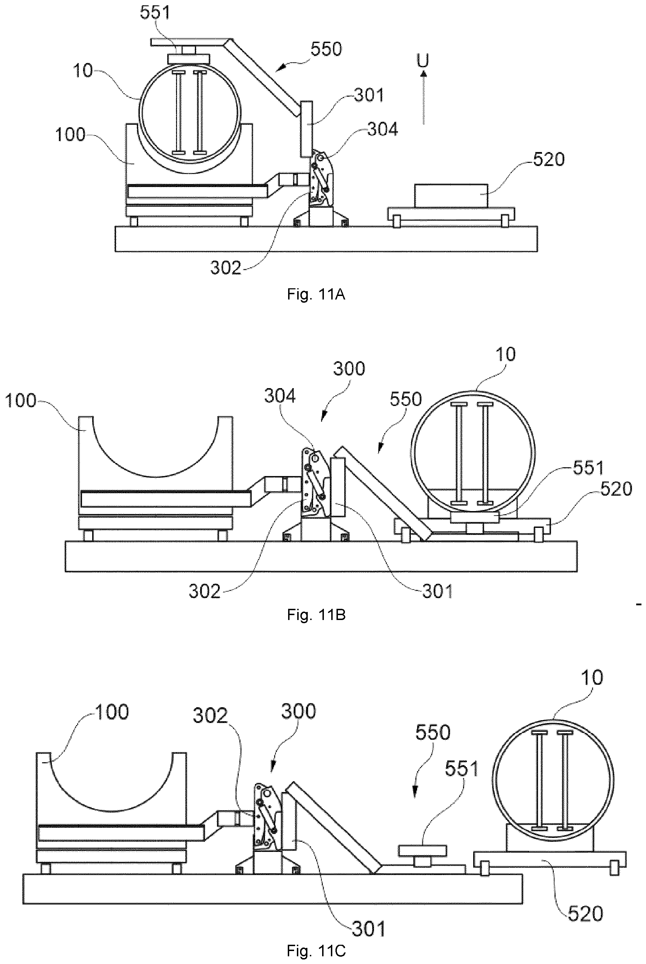

Although a number of blocks are provided in method 900, the method itself is not limited to the specific order or sequence indicated in Figure 9. Furthermore, additional blocks may be added to satisfy specific needs and/or to further improve the method. Some of those additional blocks will be now explained with reference to Figures 10A-10D and 11A-11C.

After lifting of the blade 10 from the blade mold 100 (Figure 8D), different subsequent actions may be carried out depending on the design of the blade manufacturing line.

In one example, the method may comprise, after lifting the blade 10 out of the blade mold 100, removing the blade mold 100 and positioning one or more blade carts 520 underneath the lifted blade 10. The blade mold 100 may e.g. return to a starting workstation of the manufacturing line to be used in the manufacture of another blade.

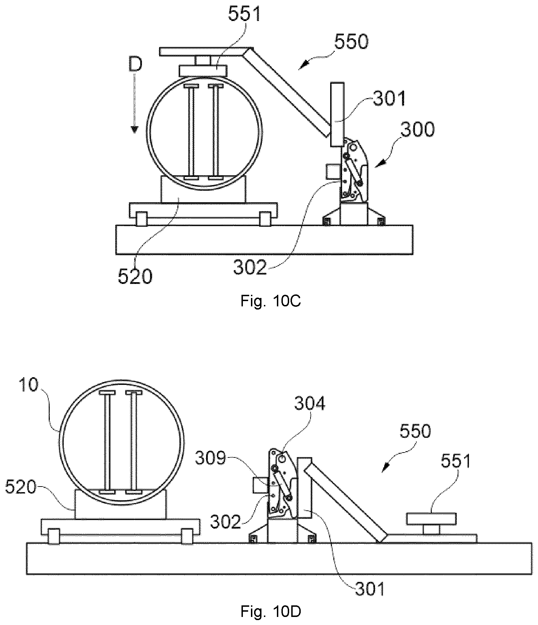

The method may further comprise lowering the blade 10 onto the blade carts 520 by vertically displacing the grippers 551 in a downwards direction. Finally, the method may comprise releasing the blade 10 from the grippers 551. This sequence is schematically illustrated by Figures 10A - 10D. Thus, Figure 10A shows the system after having removed the blade mold 100. Subsequently, a blade cart 520 is placed under the lifted blade 10 in Figure 10B. Figure 10C shows the lowering of the blade 10 along the vertical direction, D, until the blade 10 rests on the blade cart 520. The grippers 551 may then be released. Finally, Figure 10D shows an additional step in this example, which comprises rotating the movable member 301 of the hinge device so that the demolding tool 550 is returned to the original, i.e. to the coupling/uncoupling position or "open configuration".

In this example, the demolded blade 10 may be moved to another workstation, e.g. to a testing (NDT) workstation or a finishing workstation for some additional steps where the wind turbine blade 10 may be cut, trimmed, painted and the final fittings may be mounted. Subsequently, a new blade mold containing a new blade may be arranged in position in the same workstation for the corresponding demolding operation, and/or for other operations, including e.g. the previously illustrated operations such as closing of the mold or placement of a shear web.

In another example of a method according to the disclosure, a different sequence may be followed as schematically depicted in Figures 11A - 11C. In this example, the blade mold 100 may be provided at a first side of the hinge devices 300 (left side in Figures 11A-11C). The method may further comprise positioning one or more blade carts 520 at a second side of the hinge devices 300 (right side in Figures 11A-11C). The demolding tool 550 may be rotated together with the blade 10 attached to the grippers 551 by rotating the movable members 301 of the hinge devices 300 about a pivot axis 304 so as to bring the blade 10 into contact with the blade carts 520. Finally, the blade 10 may be released from the grippers 551 of the demolding tool 550.

This example is shown in Figure 11A, in which a blade cart 520 is positioned on the other side of the blade mold 100 with respect to the hinge devices 300, and in Figure 11B, which depicts the situation after the blade 10 is moved from the area of the blade mold 100 to the area of the blade cart 520. Finally, as shown in figure 11C, the method may comprise moving the blade out of the workstation, e.g. so that it can be moved to a further workstation such as an NDT workstation or a finishing workstation. Similarly, although not shown in the figures, the blade mold 100 may be released from the hinge devices 300 and moved out of the workstation. In this manner, the workstation may be left empty and ready to receive, e.g. a further blade mold containing a new blade to demold and/or for other operations as commented before.

Furthermore, in an example of the disclosure, at least one the hinge devices 300 used for demolding of the blade 10 may also be used in at least a further manufacturing step of the wind turbine blade 10 and, more specifically, in a step comprising attaching a shear web 42 on a first blade shell or positioning a second blade shell on a first blade shell.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. A method for manufacturing a wind turbine blade (10), the method comprising:
providing a first blade mold (100) in a first workstation (51), the first blade mold having a first cavity for manufacture of a first blade shell;
providing a set of hinge devices (300) in the first workstation (51), the hinge devices (300) comprising a static member (302) and a movable member (301), the movable member (301) being configured to rotate with respect to the static member (302) about a pivot axis (304);
coupling a first tool (200) to the movable members (301) of the hinge devices (300) and rotating the movable members (301) with respect to the static members (302) to carry out one or more first operations with the first tool (200);
uncoupling the first tool (200) from the movable members (301) of the hinge devices (300);
coupling a second tool (400) to the movable members (301) of the hinge devices (300) and rotating the movable members (301) with respect to the static members (302) to carry out one or more second operations with the second tool (400);
uncoupling the second tool (400) from the movable members (301) of the hinge devices (300).

2. The method of claim 1 wherein the first operations and/or the second operations comprise one of attaching a shear web (42) on a first blade shell, closing the wind turbine blade (10) by positioning a second blade shell on top of a first blade shell or demolding the wind turbine blade (10) from the first blade mold (100).

3. The method of any of claims 1 or 2, further comprising:
coupling a third tool (500) to the movable members (301) of the hinge devices (300) and rotating the movable members (301) with respect to the static members (302) to carry out one or more third operations with the third tool (500);
uncoupling the third tool (500) from the movable members (301) of the hinge devices (300).

4. The method of claim 3 wherein the first operations comprises attaching a shear web (42) on a first blade shell, the second operations comprise closing the wind turbine blade (10) by arranging a second blade shell on top of a first blade shell and the third operations comprise demolding the wind turbine blade (10) from the first blade mold.

5. The method of any of claims 3 or 4 wherein the first tool (200), the second tool (400) and the third tool (500) are provided in the first workstation (51).

6. The method of any of claims 1 to 4 wherein at least one of the first (200), the second (400) or the third (500) tool is provided in a second workstation (52) and, more specifically, wherein each of the first tool (200), the second tool (400) and the third tool (500) is provided in a different workstation.

7. The method of claim 6, comprising moving the first blade mold (100) and at least a portion of the set of hinge devices (300) from the first workstation (51) to the second workstation (52) or to the different workstations.

8. The method of any previous claim, comprising releasably connecting the static member (302) of at least one of the hinge devices (300) to the first blade mold (100).

9. The method of claims 7 and 8 wherein moving the first blade mold (100) and at least a portion of the set of hinge devices (300) comprises connecting the static members (302) of the hinge devices (300) to the first blade mold (100) and moving them together.

10. The method of any previous claim, the method further comprising vertically displacing at least one of the tools (200, 400, 500) after rotating the movable member (301) of the hinge devices (203) and before carrying out the corresponding operations.

11. A system for use during manufacturing of a wind turbine blade (10) in a manufacturing plant, the system comprising:
a first blade mold (100) having a first cavity for manufacture of a first blade shell;
a first tool (200) configured to assist during one or more first operations;
a second tool (400) configured to assist during one or more second operations;
a set of hinge devices (300) comprising a static member (302) and a movable member (301), the movable member (301) being configured to rotate with respect to the static member (302) about a pivot axis (304) and being further configured to be releasably connected to the first tool (200) and to the second tool (400).

12. The system of claim 11, the system further comprising a third tool (500) configured to assist during one or more third operations.

13. The system of any of claims 11 or 12 wherein the first tool (200), the second tool (400) and/or the third tool (500) comprise at least one of a tool for attaching a shear web (42) on a blade shell, a mold for manufacturing and containing a blade shell or a tool for demolding a blade (10).

14. The system of any of claims 11 to 13 wherein the movable member (301) of the hinge devices (300) is configured to rotate with respect to the static member (302) about a substantially horizontal pivot axis (304), the pivot axis (304) being vertically displaceable.

15. The system of any of claims 11 to 14 wherein at least one of the tools (200, 400, 500) comprises a plurality of parts, the parts being configured to be distributed along the length of the blade mold (100).
